# FASCICULE DE BREVET EUROPEEN

(11) **EP 1 454 509 B1**
(45) Date de publication et mention de la délivrance du brevet: **11.04.2007**
(21) Numéro de dépôt: 02796908.8
(22) Date de dépôt: 11.12.2002
(51) Int. Cl.: H05B 3/84

(54) **VITRE CHAUFFANTE AVEC UN REVETEMENT SUPERFICIEL ELECTRIQUEMENT CONDUCTEUR**
BEHEIZBARE SCHEIBE VERSEHEN MIT EINER ELEKTROLEITENDEN BESCHICHTUNG
HEATED PANE WITH AN ELECTRICALLY-CONDUCTIVE SURFACE COATING

(30) Priorité: 11.12.2001 DE 10160806
(43) Date de publication de la demande: 08.09.2004
(73) Titulaire: SAINT-GOBAIN GLASS FRANCE, 92400 Courbevoie (FR)
(72) Inventeur: MAEUSER, Helmut, 52134 Herzogenrath (DE); CRUMBACH, Richard, 52072 Aachen (DE); JANSEN, Manfred, 52511 Geilenkirchen (DE); SZNERSKI, Andreas, 52499 Baeseweiler (DE)
(74) Mandataire: Aupetit, Muriel J. C.
(86) Numéro de dépôt international: PCT/FR2002/004281
(87) Numéro de publication internationale: WO 2003/051088

(56) Documents cités:
- EP-A- 0 524 537

## Description

L'invention se rapporte à une vitre chauffante présentant les caractéristiques du préambule de la revendication 1.

Des vitres chauffantes sont fréquemment utilisées comme pare-brise dans des véhicules automobiles. En l'occurrence, le revêtement superficiel transparent servant d'élément chauffant, pour lequel il s'agit par exemple d'un système multicouche avec une couche métallique électriquement conductrice (couche conductrice ou chauffante), est avantageusement protégé contre des influences mécaniques et atmosphériques, en le disposant à l'intérieur d'un composite, par exemple à l'intérieur d'une vitre feuilletée. De façon particulièrement avantageuse, le revêtement superficiel transparent est disposé directement sur la surface d'une des deux vitres individuelles formant la vitre feuilletée, qui est assemblée à l'autre vitre individuelle par une couche intermédiaire en une matière plastique transparente, comme du polyvinyl butyral (PVB). Une telle vitre feuilletée chauffante, dans laquelle la couche de chauffage transparente et les conducteurs d'arrivée du courant se trouvent à l'intérieur de la vitre feuilletée, est connue par exemple par le document DE 36 44 297 A1.

La couche conductrice transparente peut cependant aussi se composer d'une couche d'oxyde électriquement conductrice, comme de l'oxyde d'étain ou de l'oxyde d'indium-étain, de même on connaît des vitres pourvues d'une couche chauffante transparente, dans lesquelles le revêtement superficiel électriquement conducteur transparent est disposé sur un film supplémentaire à l'intérieur du composite.

Pour l'introduction du courant de chauffage dans la couche, on emploie usuellement des rails collecteurs de courant en forme de rubans, qui sont en règle générale constitués d'un composé d'argent conducteur de type émail la plupart du temps cuit avant le dépôt de la couche de chauffage. Si l'on utilise des systèmes de couches désignés comme couches flexibles, qui résistent aux hautes températures utilisées pour le cintrage des vitres, alors les rails collecteurs de courant peuvent aussi être imprimés après le revêtement et ensuite être cuits. Souvent, on dispose en plus sur ces rails conducteurs de courant des bandes de film métallique, qui abaissent la résistance électrique des rails conducteurs de courant, afin d'éviter une chute de tension à l'intérieur des rails conducteurs de courant. Une vitre chauffante de cette nature est connue par exemple par le document DE 39 37 346 A1.

Dans des vitres à chauffage électrique de forme rectangulaire ou sensiblement rectangulaire avec un revêtement superficiel transparent comme élément chauffant, le courant de chauffage est en règle générale introduit dans la couche conductrice par deux rails collecteurs de courant disposés parallèlement l'un à l'autre, dans lesquels ceux-ci sont placés le long de deux côtés opposés de la vitre. Avec une telle disposition, le courant de chauffage circule d'une façon sensiblement uniforme à travers toute la couche de chauffage, qui est de cette manière chauffée au total de manière uniforme sur toute la surface.

Dans des vitres à chauffage électrique, dont la forme s'écarte de la forme rectangulaire, il peut se créer un champ chauffant hétérogène avec des zones plus chaudes et plus froides, parce que la densité de courant dans la couche de chauffage a une valeur différente en fonction de la disposition des électrodes et de la largeur locale du champ chauffant. Par exemple, les pare-brise usuellement employés dans l'industrie automobile sont plus longs à leur côté inférieur qu'à leur côté supérieur, de même leur hauteur au milieu de la vitre peut être plus grande que sur les côtés latéraux. Ainsi, la région du côté supérieur de la vitre peut être chauffée sensiblement plus fort que celle du côté inférieur de la vitre, alors qu'il faut précisément une puissance de chauffage plus grande sur le côté inférieur de la vitre, pour empêcher en hiver le gel des essuie-glaces disposés dans cette région. Tout le champ chauffant doit dans ce cas être conçu en fonction de la puissance de chauffage minimale pour la région du côté inférieur de la vitre. En même temps, la région supérieure de la vitre qui s'échauffe plus rapidement, ne peut pas, selon le législateur, dépasser en service une température de surface de 70°C. En outre, des normes de travail propres au fabricant et des conditions de livraison techniques sont d'application. A l'exemple d'un fabricant automobile déterminé, la température de surface sur le rail collecteur de courant et dans le champ chauffant ne peut pas être de plus de 50°C après un temps de chauffage de 15 minutes.

Si l'on veut, avec de telles vitres dont la forme géométrique s'écarte de la forme rectangulaire, obtenir un champ chauffant homogène avec une température sensiblement uniforme sur toute l'étendue de la couche de chauffage ou chauffer plus fort la région de la vitre située sur le côté plus long de la vitre, il convient de prendre des dispositions particulières. Par le document US-PS 2 878 357, il est par exemple connu de subdiviser la couche de chauffage en segments séparés les uns des autres par des lignes de séparation orientées parallèlement aux côtés parallèles d'une vitre trapézoïdale, de munir les segments individuels d'électrodes séparées et d'appliquer des tensions différentes aux électrodes des segments individuels de la couche. La pluralité des lignes de séparation entre les segments individuels de la couche à l'intérieur de la zone de vision peut cependant nuire à l'aspect unitaire de la vitre chauffante.

Une autre solution est connue par le document DE 36 44 297 A1 déjà cité. Dans ce cas, le flux de courant est limité à des zones déterminées de la surface par des fentes dans la couche de chauffage. On réduit ainsi l'absorption de puissance, et on atteint pourtant, dans les zones de la surface parcourues par le courant, une densité de courant suffisante pour dégivrer ou pour éliminer un dépôt de buée de la vitre. L'inconvénient de cette solution est également que les fente s sont visibles à l'intérieur de la zone de vision et nuisent à l'aspect unitaire de la vitre.

Par le document DE 692 26 955 T2, on connaît une vitre chauffante sous la forme d'un pare -brise de voiture, à l'origine de l'invention, avec un revêtement super ficiel transparent servant de résistance de chauffage et deux rails collecteurs de courant électriquement raccordés à celui -ci et encadrant entre eux un champ chauffant, dans laquelle un troisième rail collecteur de courant est disposé parallèlement au premier et au deuxième rails collecteurs de courant, transversalement à la direction du flux de courant dans le champ chauffant, et divise le champ chauffant en deux champs chauffants séparés. Un des deux champs chauffants séparés se trouve dans la zone de vision principale du pare -brise, l'autre champ chauffant sert d'élément chauffant pour la zone de repos des essuie -glaces. Ce champ chauffant présente une faible hauteur appropriée à sa fonction, la résistance entre ses rails collecteurs de courant est don c faible par comparaison avec la résistance du champ chauffant de la zone de vision, de sorte que l'on atteint dans cette zone de la vitre une puissance spécifique plus élevée. Si les deux circuits de chauffage sont alimentés avec la même tension, il peut cependant se produire des surchauffes dans la zone de repos des essuie-glaces.
De même, le document EP 0 524 537 A2, divulgue une telle disposition de rails collecteurs de courant en parallèle qui assurent deux zones de chauffage séparées. Cependant, là encore, des surchauffes peuvent se produire.
Dans des formes géométriques trapézoïdales, on vise également, dans le cadre de l'invention décrite ici, des développements de vitres de fenêtre qui représentent des portions d'anneaux circulaires ou des portions de formes analogues à des anneaux circulaires, dont les rayons présentent des points centraux différents. En première approximation, on peut partir, pour toutes ces formes géométriques, d'un trapèze dont les côtés non parallèles sont de même longueur.

L'invention a pour objet de présenter une vitre chauffante avec un revêtement superficiel transparent servant de résistance de chauffage, dont la puissance de chauffage peut être réglée de manière localement différenciée.

Conformément à l'invention, la vitre chauffante avec un revêtement superficiel électriquement conducteur, qui peut être électriquement raccordé comme élément chauffant à une source de tension à l'aide d'un premier et d'un deuxième rails collecteurs de courant parallèles entre eux pour définir une zone de vision, le deuxième rail collecteur séparant la zone de vision d'une zone chauffante supplémentaire, est caractérisée en ce qu'au moins deux autres rails collecteurs de courant sont disposés dans la zone chauffante supplémentaire, au moins un rail étant raccordé électriquement au deuxième rail collecteur de séparation des deux zones de vision et de chauffage supplémentaire, et formant un angle compris entre 45° et 135° avec ledit deuxième rail collecteur, et au moins un autre rail collecteur pénètre dans la zone de chauffage supplémentaire en direction dudit deuxième rail collecteur de séparation des zones sans entrer en contact électrique avec celui-ci.

Dans une réalisation avantageuse de la vitre chauffante conforme à l'invention, le rail collecteur de courant séparant l'une de l'autre les deux zones de chauffage (zone de vision et zone chauffante supplémentaire) possède au moins un prolongement coudé sensiblement perpendiculaire , qui sert de rail collecteur de courant pour la zone chauffante supplémentaire. Les rails collecteurs de courant précités sont dès lors raccordés électriquement l'un à l'autre et sont dès lors aussi raccordés à une source d'énergie électrique par une alimentation électrique commune. De cette manière, on peut économiser une alimentation électrique soit du rail collecteur de courant de la zone de vision soit de celui de la zone chauffante supplémentaire.

Selon une caractéristique au moins un second autre rail collecteur de courant est disposé sensiblement perpendiculaire au rail collecteur de courant séparant l'une de l'autre les deux zones de chauffage sans entrer en contact électrique avec celui-ci.

Dans le cas où la distance et dès lors la résistance de raccordement entre ses rails collecteurs de courant est trop grande pour produire une puissance de chauffage prédéterminée, la zone de chauffage supplémentaire peut être divisée en deux ou plus de deux zones de chauffage. A cet effet, un nombre de paires de rails collecteurs de courant correspondant au nombre de zones de chauffage est disposé à l'intérieur de la zone chauffante supplémentaire. Il est cependant également possible d'alimenter en énergie électrique deux zones de chauffage voisines sur leurs côtés jointifs l'un à l'autre au moyen d'un rail collecteur de courant commun. Dans ce cas, la direction du flux de courant change chaque fois dans des zones de chauffage contiguës l'une à l'autre.

Les zones de chauffage individuelles sont de préférence raccordées à des sources de tension avec une tension identique, ce qui permet, surtout pour l'utilisation de la vitre chauffante conforme à l'invention dans des véhicules automobiles, une importante simplification du réseau électrique de bord. La puissance de chauffage dans la zone chauffante supplémentaire peut être adaptée pratiquement à volonté au moyen de zones de chauffage individuelles.

De préférence, le revêtement continu, déposé uniformément sur toute la surface de la vitre, est divisé entre la zone de vision et la zone chauffante supplémentaire, afin d'éviter des courts-circuits entre les rails collecteurs de courant présentant des potentiels électriques différents. Le revêtement superficiel peut être divisé de plusieurs façons connues en deux résistances de chauffage galvaniquement séparées l'une de l'autre, par exemple mécaniquement à l'aide d'un outil de meulage. Il est également connu d'appliquer, avant le dépôt du revêtement superficiel, un agent de séparation dans la région de la ligne de séparation désirée, sur lequel la matière du chauffage en couche n'adhère pas, de telle manière qu'elle puisse être balayée localement après l'opération de revêtement. De préférence, la ligne de séparation est cependant réalisée à l'aide d'un faisceau laser, parce que cette méthode permet de produire une ligne de séparation particulièrement fine, à peine perceptible pour l'oeil humain.

Dans le cas où les rails collecteurs de courant ne doivent pas être visibles, pour des raisons esthétiques, ils peuvent être cachés au moyen d'une couche colorée opaque. Usuellement, les vitres de véhicules sont déjà pourvues d'un revêtement de bord opaque en forme de cadre, qui sert de protection anti-UV de l'assemblage collé à une bride de carrosserie. Celui-ci peut sans plus recouvrir les rails collecteurs de courant disposés dans la région du bord supérieur de la vitre chauffante et les protéger contre une vision de l'extérieur. Si la zone chauffante supplémentaire n'est pas couverte par d'autres pièces et que la vue de celle-ci n'est pas souhaitée, on peut par exemple augmenter la largeur du revêtement de bord dans la région inférieure de la vitre chauffante de manière telle que toute la zone chauffante supplémentaire et ses rails collecteurs de courant associés ainsi que le rail collecteur de courant inférieur du champ de vision chauffant soient couverts. Bien entendu, le recouvrement de la zone chauffante supplémentaire est également possible à l'aide de couleurs suffisamment opaques, indépendamment du revêtement de bord en forme de cadre. Avec des couches colorées supplémentaires, on peut de la même façon empêcher la vue des rails collecteurs de courant par l'intérieur.

La vitre chauffante conforme à l'invention peut être une vitre monolithique en verre ou en matière plastique, si le revêtement superficiel est suffisamment résistant aux influences ambiantes et aux agressions mécaniques, ou s'il est revêtu d'une couche de protection correspondante. De préférence, la vitre chauffante se compose cependant d'un feuilleté comprenant deux ou plus de deux vitres de verre et/ou de matière plastique, qui sont assemblées l'une à l'autre au moyen d'une couche adhésive, par exemple en polyvinyl butyral. Le revêtement superficiel peut être appliqué sur une des faces principales de la vitre ou sur un film fonctionnel supplémentaire, auquel cas il est usuellement disposé à l'intérieur du feuilleté. Le caractère d'un revêtement superficiel reste cependant préservé, même à l'intérieur du feuilleté, parce qu'une surface d'une des couches du feuilleté est toujours revêtue.

D'autres détails et avantages de l'objet de l'invention sont présentés, sans aucune intention de limitation, par les dessins d'un exemple de réalisation et par sa description détaillée qui suit.

Dans ces dessins, qui constituent des représentations simplifiées sans échelle particulière, la
- Fig. 1: illustre une première forme de réalisation d'une vitre chauffante conforme à l'invention avec une zone chauffante supplémentaire divisée en deux; la
- Fig. 2: représente une deuxième forme de réalisation avec une zone chauffante supplémentaire divisée en quatre champs chauffants; et la
- Fig. 3: montre une forme de réalisation de la vitre chauffante conforme à l'invention avec une zone chauffante supplémentaire ne se composant que d'un seul champ chauffant.

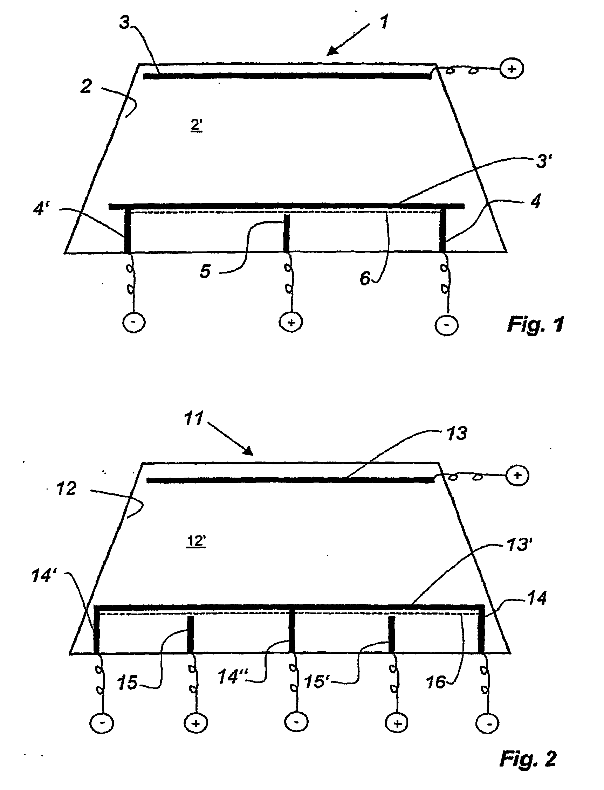

Dans la figure 1 est représentée une vitre chauffante 1, qui se compose d'une vitre trapézoïdale 2. Un revêtement superficiel transparent et électriquement conducteur 2' s'étend sur toute la surface de la vitre 2. Usuellement, la résistance de surface d'une telle couche mince servant d'élément chauffant vaut environ 4 Ω/□. Le long du côté supérieur de la vitre 2 se trouve un rail collecteur de courant 3, qui est raccordé à la borne positive d'une source d'énergie électrique non représentée. Un deuxième rail collecteur de courant 3' est disposé dans la région du côté inférieur de la vitre 2. La zone de vision revêtue de la vitre chauffante 1 s'étend environ sur les 4/5 de la hauteur de la vitre entre les rails collecteurs de courant 3 et 3'. Aux deux extrémités du rail collecteur de courant 3' est chaque fois disposé un autre rail collecteur de courant 4, respectivement 4', menant jusqu'au côté inférieur de la vitre 2, qui sont électriquement reliés au rail collecteur de courant 3'. Les rails collecteurs de courant 3' et 4, respectivement 3' et 4', forment un angle compris entre 45 et 135°C, de préférence d'environ 90°. Les rails collecteurs de courant 4 et 4', ici sensiblement perpendiculaire au rail collecteur 3', sont chaque fois raccordés à la masse de la source d'énergie et servent en même temps de raccordements électriques du rail collecteur de courant 3', qui est ainsi raccordé également à la borne de masse. Il est également possible, dans de nombreux cas, de se passer du raccordement d'un des deux rails collecteurs de courant 4 ou 4' à la source d'énergie, si la chute de tension le long du rail collecteur de courant 3' ne dépasse une certaine valeur limite. Au milieu du côté inférieur et perpendiculairement à celui-ci, un autre rail collecteur de courant 5 pénètre dans la face de la vitre en direction du rail collecteur de courant 3', cependant sans entrer en contact électrique avec celui-ci. Le rail collecteur de courant 5 est raccordé à une borne positive de la source d'énergie électrique. Entre les rails collecteurs de courant 4 et 5 d'une part et 5 et 4' d'autre part, il se forme chaque fois un champ chauffant partiel de la zone chauffante supplémentaire, les directions de flux de courant dans ces champs chauffants partiels étant tournées de 180° l'une par rapport à l'autre et étant perpendiculaires à la direction de flux de courant dans la zone de vision chauffée. Les rails collecteurs de courant peuvent par exemple se composer d'une couleur contenant de l'argent, qui a été imprimée sur la vitre avant ou après le dépôt du revêtement superficiel.

Entre le rail collecteur de courant 5 et le rail collecteur de courant 3', il est prévu une ligne de séparation 6, qui sépare galvaniquement la zone chauffante supplémentaire de la face principale revêtue de la vitre chauffante 1. Il n'est en l'occurrence pas nécessaire de conduire la ligne de séparation jusqu'aux bords latéraux de la vitre 2, si les rails collecteurs de courant extérieurs 4 et 4' sont portés au même potentiel que le rail collecteur de courant intérieur 3' du champ de vision chauffant.

Les chauffages de surface pour la zone de vision et la zone supplémentaire peuvent, en cas de besoin, être effectués avec des tensions électriques différentes, bien qu'ils soient raccordés à un conducteur de masse commun. Il est par ailleurs possible de faire fonctionner les zones de chauffage indépendamment l'une de l'autre, donc de faire fonctionner soit uniquement la zone chauffante supplémentaire soit uniquement l'élément chauffant pour la zone de vision, ou bien de faire fonctionner les deux chauffages en même temps.

La figure 2 montre une disposition analogue à la figure 1, la zone chauffante supplémentaire a simplement été divisée en quatre champs chauffants. Le rail collecteur de courant 13' possède à cet effet trois dérivations menant en direction du côté inférieur de la vitre, qui sont raccordées à la borne de masse sous la forme de rails collecteurs de courant 14, 14' et 14". Les champs formés par des dérivations sont divisés par des rails collecteurs de courant 15 et 15' raccordés à la borne positive d'une source d'énergie.

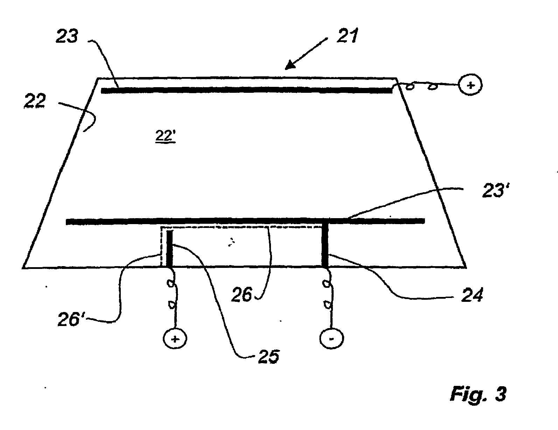

Dans la figure 3 enfin, la vitre 21 est équipée d'une zone chauffante supplémentaire constituée uniquement par un seul champ chauffant. Une plus grande extension de la zone chauffante supplémentaire n'est par exemple pas nécessaire, lorsque les essuie-glaces d'un véhicule n'ont leur position de repos que dans une région limitée sur le côté inférieur de la vitre chauffante 21. Ceci est par exemple le cas lorsqu'un véhicule est équipé d'essuie-glaces à mouvement opposé, qui sont disposés l'un au-dessus de l'autre dans leur position de repos, ou lorsqu'il n'y a qu'un seul essuie-glace. La position du champ chauffant unique peut bien entendu aussi être décalée de manière asymétrique par rapport à l'axe de symétrie vertical de la vitre 21, en fonction de la position de repos du ou des essuie-glaces.

Avec un nombre impair de champs chauffants, le rail collecteur de courant 25, dont le potentiel électrique se différencie certes de celui du rail collecteur de courant 23' appartenant à l'élément chauffant de la zone de vision de la vitre 21, doit pourtant être galvaniquement séparé du revêtement superficiel déposé sur toute la surface de la vitre 21, au moyen d'une autre ligne de séparation 26'.

Les vitres 1, 11 ou 21 peuvent être employées directement sous forme de vitres monolithiques, si le revêtement superficiel et les rails collecteurs de courant et les raccordements sont suffisamment résistants aux influences chimiques et mécaniques. En général, de telles vitres sont cependant utilisées dans un feuilleté comprenant une autre vitre en verre ou en matière plastique. L'autre vitre peut alors être pourvue d'un dépôt en forme de cadre de couleur opaque, qui masque tous les rails collecteurs de courant et la région de la zone chauffante supplémentaire, de telle manière qu'aucune arrivée de courant ne soit visible lorsque l'on regarde de l'extérieur. Usuellement, les zones de bord doivent aussi être, dans une certaine mesure, libres de couche conductrice, parce que d'une part celle-ci est sensible à la corrosion et que dès lors elle ne peut pas être en contact avec l'air ambiant (humide) et d'autre part il faut éviter un court-circuit avec une carrosserie habituellement métallique.

## Revendications

1. La vitre chauffante (1, 11, 21) avec un revêtement superficiel électriquement conducteur (2', 12', 22'), qui peut être électriquement raccordé comme élément chauffant à une source de tension à l'aide d'un premier (3, 13, 23) et d'un deuxième (3', 13' , 23') rails collecteurs de courant parallèles entre eux pour définir une zone de vision, le deuxième rail collecteur séparant la zone de vision d'une zone chauffante supplémentaire, est **caractérisée en ce qu'**au moins deux autres rails collecteurs de courant (4, 4', 5, 14, 14', 14" , 15, 15', 24, 25) sont disposés dans la zone chauffante supplémentaire, au moins un rail (4, 4', 14, 14', 14" , 24) étant raccordé électriquement au deuxième rail collecteur (3', 13', 23') de séparation des deux zones de vision et de chauffage supplémentaire, et formant un angle compris entre 45° et 135° avec ledit deuxième rail collecteur, et au moins un autre rail collecteur (5, 15, 15', 25) pénètre dans la zone de chauffage supplémentaire en direction dudit deuxième rail collecteur de séparation des zones sans entrer en contact électrique avec celui-ci.

2. Vitre chauffante (1, 11, 21) selon la revendication 1, **caractérisée en ce que** le rail collecteur (5, 15, 15', 25) pénétrant dans la zone de chauffage supplémentaire sans entrer en contact avec le deuxième rail collecteur de séparation des zones (3', 13', 23') est disposé perpendiculairement à celui-ci.

3. Vitre chauffante (1, 11, 21) suivant l'une quelconque des revendications précédentes, **caractérisée en ce que** la zone chauffante supplémentaire est divisée en plusieurs zones chauffantes.

4. Vitre chauffante (1, 11, 21) suivant la revendication 3, **caractérisée en ce que** les rails collecteurs de courant (5, 14", 15, 15') disposés à l'intérieur de la zone chauffante supplémentaire servent de rail collecteur de courant commun pour deux zones de chauffage voisines.

5. Vitre chauffante (1, 11, 21) suivant l'une quelconque des revendications précédentes, **caractérisée en ce que** les circuits électriques pour la zone de vision chauffée et la zone chauffante supplémentaire sont raccordés à des sources d'énergie ayant la même tension électrique.

6. Vitre chauffante (1, 11, 21) suivant l'une quelconque des revendications précédentes, **caractérisée en ce que** la zone chauffante supplémentaire est, au moins par zones, séparée galvaniquement de la zone de vision chauffée par une ligne de séparation (6, 16, 26, 26').

7. Vitre chauffante (1, 11, 21) suivant la revendication 6, **caractérisée en ce que** la ligne de séparation (6, 16, 26, 26') a été produite par usinage avec un laser.

8. Vitre chauffante (1, 11, 21) suivant l'une quelconque des revendications précédentes, **caractérisée en ce que** la zone chauffante supplémentaire est protégée contre la vue de l'extérieur et/ou de l'intérieur au moyen d'une couche colorée.

9. Vitre chauffante (1, 11, 21) suivant l'une quelconque des revendications précédentes, **caractérisée en ce que** la vitre chauffante (1, 11, 21) est pourvue d'une couche colorée en forme de cadre.

10. Vitre chauffante suivant l'une quelconque des revendications précédentes, **caractérisée en ce que** la vitre chauffante est construite comme une vitre feuilletée.

11. Vitre chauffante suivant la revendication 10, **caractérisée en ce que** la vitre feuilletée se compose de deux vitres rigides, en particulier en verre, et d'une couche adhésive thermoplastique assemblant celles-ci l'une à l'autre.

## Claims

1. A heated window (1, 11, 21) with an electrically conducting surface coating (2', 12', 22') which may be electrically connected as a heating element to a voltage source using a first (3, 13, 23) and a second (3', 13', 23') current-collecting rail arranged parallel between them so as to define a look-through region, the second current-collecting rail separating the look-trough region from an additional heated region, is **characterized in that** at least two other current-collecting rails (4, 4', 5, 14, 14', 14", 15, 15', 24, 25) are arranged in the additional heated region, at least one current-collecting rail (4, 4', 14, 14', 14", 24) being electrically connected to the second current-collecting rail (3', 13', 23') of splitting of the look-through region from the additional heated region, and making an angle of between 45 and 135° with the second current-collecting rail, and at least one another current-collecting rail (5, 15, 15', 25) enters the additional heated region towards the second current-collecting rail of splitting of regions without coming into electrical contact therewith.

2. The heated window (1, 11, 21) as claimed in claim 1, **characterized in that** the current -collecting rail (5, 15, 15', 25) entering the additional heated region without coming into contact with the second current-collecting rail of splitting of regions (3', 13', 23') is arranged perpendicular thereto.

3. The heated window (1, 11, 21) as claimed in any one of the preceding claims, **characterized in that** the additional heated region is split into several heated regions.

4. The heated window (1, 11, 21) as claimed in claim 3, **characterized in that** the current-collecting rails (5, 14" , 15, 15') arranged inside the additional heated region act as a current-collecting rail common to two adjacent heated regions.

5. The heated window (1, 11, 21) as claimed in any one of the preceding claims, **characterized in that** the electrical circuits for the heated look-through region and the additional heated region are connected to power sources at the same voltage.

6. Heated window (1, 11, 21) as claimed in any one of the preceding claims, **characterized in that** the additional heated region is, at least in regions, electrically separated from the heated look-through region by a separating line (6, 16, 26, 26').

7. The heated window (1, 11, 21) as claimed in claim 6, **characterized in that** the separating line (6, 16, 26, 26') has been produced by laser machining.

8. The heated window (1, 11, 21) as claimed in any one of the preceding claims, **characterized in that** the additional heated region is protected against sight from the outside and/or from the inside by means of a colored layer.

9. The heated window (1, 11, 21) as claimed in any one of the preceding claims, **characterized in that** the heated window (1, 11, 21) is provided with a colored layer in the form of a surround.

10. The heated window as claimed in any one of the preceding claims, **characterized in that** the heated window is made as a laminated window.

11. The heated window as claimed in claim 10, **characterized in that** the laminated window is made up of two rigid panes, particularly glass ones, and of a thermoplastic adhesive layer joining these two together.

## Patentansprüche

1. Heizscheibe (1, 11, 21) mit einer elektrisch leitenden Oberflächenbeschichtung (2', 12', 22'), die als Heizelement elektrisch mit einer Spannungsquelle mithilfe einer ersten (3, 13, 23) und einer zweiten Stromsammelschiene (3', 13', 23') verbindbar ist, welche parallel zueinander sind, um einen Sichtbereich einzuschließen, wobei die zweite Stromsammelschiene den Sichtbereich von einem Zusatzheizbereich abteilt, **dadurch gekennzeichnet, dass** mindestens zwei weitere Stromsammelschienen (4, 4', 5, 14, 14', 14" 15, 15', 24, 25) im Zusatzheizbereich angeordnet sind, wobei mindestens eine Schiene (4, 4', 14, 14', 14", 24) elektrisch mit der zweiten, den Sichtbereich und den Zusatzheizbereich trennenden Sammelschiene (3', 13', 23') verbunden ist, und einen mit der besagten zweiten Sammelschiene einen Winkel zwischen 45° und 135° bildet, und dass mindestens eine andere Sammelschiene (5, 15, 15', 25) sich in den Zusatzheizbereich in Richtung auf die besagten zweite, die Bereiche trennende Sammelschiene (3', 13', 23') erstreckt, ohne mit dieser in elektrischem Kontakt zu stehen.

2. Heizscheibe (1, 11, 21) nach Anspruch 1, **dadurch gekennzeichnet, dass** die Sammelschiene (5, 15, 15', 25), die sich ohne Kontakt mit der zweiten, die Bereiche trennenden Sammelschiene (3', 13', 23') in den Zusatzheizbereich erstreckt, senkrecht zu dieser angeordnet ist.

3. Heizscheibe (1, 11, 21) nach einem der vorhergehenden Ansprüche, **dadurch gekennzeichnet, dass** der Zusatzheizbereich in mehrere Heizzonen aufgeteilt ist.

4. Heizscheibe (1, 11, 21) nach Anspruch 3, **dadurch gekennzeichnet, dass** die innerhalb des Zusatzheizbereichs angeordneten Stromsammelschienen (5, 14", 15, 15') als gemeinsame Stromsammelschiene für zwei benachbarte Heizzonen dienen.

5. Heizscheibe (1, 11, 21) nach einem der vorhergehenden Ansprüche, **dadurch gekennzeichnet, dass** die Stromkreise für den beheizten Sichtbereich und den Zusatzheizbereich an Energiequellen gleicher elektrischer Spannung angeschlossen sind.

6. Heizscheibe (1, 11, 21) nach einem der vorhergehenden Ansprüche, **dadurch gekennzeichnet, dass** der Zusatzheizbereich zumindest bereichsweise durch eine Trennlinie (6, 16, 26, 26') von dem beheizten Sichtbereich galvanisch abgetrennt ist.

7. Heizscheibe (1, 11, 21) nach Anspruch 6, **dadurch gekennzeichnet, dass** die Trennlinie (6, 16, 26, 26') durch Bearbeitung mit einem Laser erzeugt wurde.

8. Heizscheibe (1, 11, 21) nach einem der vorhergehenden Ansprüche, **dadurch gekennzeichnet, dass** der Zusatzheizbereich mittels einer Farbschicht gegen Ansicht von außen und / oder innen geschützt ist.

9. Heizscheibe (1, 11, 21) nach einem der vorhergehenden Ansprüche, **dadurch gekennzeichnet, dass** die Heizscheibe (1, 11, 21) mit einer rahmenartigen Farbschicht versehen ist.

10. Heizscheibe nach einem der vorhergehenden Ansprüche, **dadurch gekennzeichnet, dass** die Heizscheibe als Verbundscheibe aufgebaut ist.

11. Heizscheibe nach Anspruch 10, **dadurch gekennzeichnet, dass** die Verbundscheibe aus zwei starren, insbesondere Glasscheiben und einer diese miteinander verbindenden thermoplastischen Klebeschicht besteht.
